# EUROPÄISCHE PATENTSCHRIFT

(11) **EP 2 807 962 B1**
(45) Veröffentlichungstag und Bekanntmachung des Hinweises auf die Patenterteilung: **12.07.2017**
(21) Anmeldenummer: 14169397.8
(22) Anmeldetag: 22.05.2014
(51) Int. Cl.: A47J 31/22, A47J 31/42

(54) **Kaffeevollautomat mit einer Zentrifugierkammer**
Fully automatic coffee maker with a centrifuge chamber
Machine à café entièrement automatique équipée d'une chambre de centrifugation

(30) Priorität: 29.05.2013 DE 102013210107
(43) Veröffentlichungstag der Anmeldung: 03.12.2014
(73) Patentinhaber: BSH Hausgeräte GmbH, 81739 München (DE)
(72) Erfinder: Beck, Rudolf, 84518 Garching a. d. Alz (DE); Ostermaier, Albert, 83371 Stein a.d. Traun (DE); Quandt, Christian, 83301 Traunreut (DE); Strobl, Robert, 83246 Unterwössen (DE)

(56) Entgegenhaltungen:
- EP-A1- 0 367 600
- DE-A1- 2 428 188
- US-A1- 2007 079 708

## Beschreibung

Die Erfindung betrifft einen Kaffeevollautomaten für Haushaltszwecke mit einer Zentrifugierkammer mit einem Oberteil und einem ihm gegenüber axial bewegbaren Unterteil als Brühraum, wobei eine Bewegung des Oberteils gegenüber dem Unterteil einen vergrößerbaren Spalt zwischen beiden ausbildet, mit einem Motor zum Antreiben der Zentrifugierkammer und mit einem Mahlwerk, das koaxial zur Zentrifugierkammer und über ihr angeordnet ist und ebenfalls vom Motor antreibbar ist.

Die DE 24 28 188 zeigt eine Kaffeemaschine, die durch Zentrifugieren des Kaffeeaufgusses arbeitet. Sie umfasst eine Zentrifugierbehälter, er aus einer oberen kegelstumpfförmigen Kappe und einer unteren Scheibe zur Bildung eines Austrittsspalts für den Kaffee am Umfang des Zentrifugierbehälters besteht, der gegenüber einem Kaffeesammelbehälter heb- und senkbar ist, welcher unterhalb einer ringförmigen Sammelrinne für den Kaffee angeordnet ist. Oberhalb des Zentrifugierbehälters ist ein Füllbehälter für Kaffeebohnen angeordnet, an dessen Bodenseite ein Mahlwerk mit einem Auslauf in den Zentrifugierbehälter hinein führt. Die Kappe und die Scheibe sind relativ zueinander verschiebbar unter Bildung eines vergrößerten Kaffeeaustrittsspalts. Die Scheibe oder die Kappe ist elastisch verformbar und läuft beim Anheben oder Absenken des Zentrifugierbehälters mit einer Geschwindigkeit um, die kleiner ist als die des jeweils anderen Elements des Zentrifugierbehälters. Sowohl eine Zerkleinerungsschraube des Mahlwerks als auch der Zentrifugierbehälter lassen sich von demselben Motor antreiben.

Aufgabe der Erfindung ist es, einen Kaffeevollautomat für Haushaltszwecke anzugeben, der ebenfalls Zentrifugalkräfte zur Kaffeebereitung nutzt, dessen Aufbau jedoch einfacher ist.

Diese Aufgabe wird bei einem eingangs genannten Kaffeevollautomaten erfindungsgemäß dadurch gelöst, dass das Mahlwerk ein feststehendes Mahlwerkzeug und einen rotierbaren Mahlwerksbehälter umfasst. Eine Kopplung stellt einen Kraftschluss zwischen dem Kammeroberteil und dem

Mahlwerk ohne Zwischenschaltung eines Getriebes oder dergleichen her. Das Mahlwerk ist oberhalb der Zentrifugierkammer angeordnet, damit das Mahlgut allein aufgrund der Schwerkraft in die Zentrifugierkammer gelangen kann. Daher kann die Kopplung zwischen dem Mahlwerk und der Zentrifugierkammer an deren

Kammeroberteil angreifen. Bei aktivierter Kopplung kann der Motor das Kammeroberteil und das Mahlwerk in derselben Winkelgeschwindigkeit antreiben. Die Erfindung ermöglicht damit also den Wegfall eines separaten Antriebs oder eines Getriebestrangs entweder für die Zentrifugierkammer oder für das Mahlwerk. Sie verfolgt vielmehr das Prinzip, die Zentrifugierkammer bzw. das Kammeroberteil und das Mahlwerk nicht nur mit Hilfe desselben Motors anzutreiben, sondern beide mit derselben Geschwindigkeit zu betreiben. Dadurch können ein aufwändiger Antrieb und ein entsprechendes Getriebe für eine der beiden Bestandteile des Kaffeevollautomaten entfallen, also entweder für das Mahlwerk oder für die Zentrifugierkammer. Sobald also beispielsweise das Kammeroberteil durch den Motor angetrieben wird und die Kopplung zwischen dem Kammeroberteil einerseits und dem Mahlwerk andererseits aktiv ist, ist zugleich auch das Mahlwerk in Betrieb genommen. Mit einer deaktivierbaren Kopplung lässt sich ggf. nur eines der beiden Bestandteile, also entweder die Zentrifugierkammer oder das Mahlwerk, separat betreiben, ohne dass der andere Bestandteil angetrieben wird. Eine dauerhafte Kopplung zwischen dem Kammeroberteil und dem Mahlwerk dagegen begünstigt einen besonders einfachen Aufbau des Kaffeevollautomaten, weil sowohl die Kopplung selbst als auch ihre Betätigungs- und Steuerungsvorrichtung entfallen können.

Bekannte Mahlwerke umfassen regelmäßig ein feststehendes Mahlwerksgehäuse, das eine Mahlkammer bildet und in dem das Mahlgut aufgenommen wird, und ein angetriebenes Mahlwerkzeug, um das Mahlgut zu zerkleinern. Erfindungsgemäß umfasst der Kaffeevollautomat demgegenüber ein Mahlwerk mit einem feststehenden Mahlwerkzeug und einem antreibbaren Mahlwerksbehälter. Erfindungsgemäß erfolgt also eine kinematische Umkehr des Mahlwerksaufbaus bezüglich des Mahlwerksbehälters einerseits und des Mahlwerkzeugs andererseits. Durch den erfindungsgemäßen Antrieb des Mahlwerksbehälters und das feststehende Mahlwerkzeug lässt sich insbesondere eine dauerhafte Kopplung zwischen dem Kammeroberteil und dem Mahlwerk konstruktiv einfach und damit kostengünstig herstellen. Das Kammeroberteil und der Mahlwerksbehälter können beispielsweise über einen gemeinsamen Mantel verfügen und durch einen radialen Zwischenboden voneinander getrennt sein. Damit kann insbesondere eine Antriebsachse für das Mahlwerk entfallen, die die Zentrifugierkammer durchdringt und ihr gegenüber regelmäßig gelagert und abgedichtet sein muss. Nicht zuletzt dadurch kann der Kaffeevollautomat einen wesentlich kompakteren Aufbau erhalten. Als Mahlwerksprinzip eignen sich so gut wie alle bekannten Prinzipien, beispielsweise Schlag-, Kegel-, Walzen-, Scheiben- oder

Raspelmahlwerke. Oberhalb des Mahlwerks kann ein Bohnenbehälter angeordnet sein, von dem aus eine Tassenportion an Bohnen in das Mahlwerk abgegeben werden kann.

Bei vielen bekannten Kaffeezubereitungsgeräten, die Zentrifugalkräfte nutzen, muss das Wasser separat, zum Beispiel von Hand, zugegeben werden. Nach einer vorteilhaften Ausgestaltung der Erfindung kann der Kaffeevollautomat eine unterhalb der Zentrifugierkammer angeordnete Wasservorratsschale und eine Pumpe zur Wasserförderung von Zubereitungswasser aus der Wasservorratsschale in die Zentrifugierkammer umfassen. Die Wasservorratsschale kann koaxial zur Zentrifugierkammer angeordnet sein, um dem Kaffeevollautomaten einen weitgehend symmetrischen Aufbau zu verleihen. Alternativ können die Pumpe und die Wasserschale aus Platzgründen nebeneinander angeordnet sein, solange die Förderung von Wasser aus der Wasserschale in die Zentrifugierkammer gewährleistet ist. Die Wasservorratsschale enthält einen Wasservorrat für mindestens eine Getränkeportion und kann vorteilhafterweise zugleich eine Heizeinrichtung umfassen, mit der das Vorratswasser auf Brühtemperatur gebracht werden kann, bevor die Pumpe es in die Zentrifugierkammer fördert. Eine größere Wasservorratsschale kann das Wasser für mehr als nur eine Getränkeportion aufnehmen und damit ein häufigeres Nachfüllen erübrigen.

Auch die Pumpe benötigt eine Energiezufuhr bzw. einen Antrieb, um das Wasser zu fördern. Sie kann vorteilhafterweise ebenfalls vom Motor antreibbar sein, der die Zentrifugierkammer und das Mahlwerk betätigt. Vorteilhafterweise kann eine Pumpe vorgesehen sein, deren Antrieb ebenfalls durch eine Kopplung mit der Zentrifugalkammer erfolgen kann, insbesondere mit deren Kammerunterteil. Bei aktivierter Kopplung und angetriebener Zentrifugierkammer wird folglich auch die Pumpe aktiviert und fördert Wasser aus der Wasserschale in die Zentrifugierkammer. Um die Pumpe zu deaktivieren, braucht lediglich die Kopplung deaktiviert zu werden. Damit entfällt wiederum ein aufwändiger Getriebestrang zum separaten Antreiben der Pumpe, was den Aufbau und damit die Herstellungskosten des Kaffeevollautomaten reduziert. Eine aktivierbare Kopplung zwischen der Pumpe und der Zentrifugierkammer kann deren unabhängigen Betrieb von der Pumpe ermöglichen. Im Betrieb der Pumpe gelangt das Zubereitungswasser aus der Wasserschale über das Kammerunterteil in die Zentrifugierkammer. Alternativ kann die Pumpe starr mit der Zentrifugierkammer gekoppelt sein, so dass die Pumpe immer dann aktiviert ist, wenn die Zentrifugierkammer angetrieben ist. Dadurch kann eine Betätigung einer Kupplungseinrichtung zur Kopplung der Pumpe an die Zentrifugierkammer entfallen. Dies kann wiederum zu einer Reduktion des mechanischen bzw. konstruktiven Aufwands der Kaffeemaschine führen.

Nach einer vorteilhaften Ausgestaltung der Erfindung kann die Pumpe als Kreiselpumpe ausgebildet sein, die durch Kopplung an die Zentrifugierkammer vom Motor antreibbar ist. In einer konstruktiv einfachen Ausführungsform kann sie ausgebildet sein wie in der DE 33 28 396 C2 des Anmelders beschrieben. Die dortige Kreiselpumpe ist einteilig mit dem Kammerunterteil ausgebildet und ragt in eine oberseitig offene Wasserschale, was den Herstellungsaufwand und die Komplexität des Kaffeevollautomaten erheblich reduziert.

Bei einer starren Kopplung sowohl des Mahlwerks als auch der Kreiselpumpe an die Zentrifugierkammer ist die Pumpe bereits zeitgleich mit dem Mahlwerk aktiviert. Durch eine rechtzeitige Zugabe des Zubereitungswassers in den Saugbereich der Pumpe kann dafür gesorgt werden, dass es erst dann in die Zentrifugierkammer gelangt, wenn jene bereits mit Kaffeepulver gefüllt ist. Nach einer vorteilhaften Ausgestaltung der Erfindung kann der Kaffeevollautomat über einen separaten Wasservorratsbehälter oberhalb der Wasserschale und eine verschließbare Leitungsverbindung dorthin verfügen. Der Wasservorratsbehälter kann ein Volumen an Zubereitungswasser vorzugsweise für mehrere Getränkeportionen umfassen. Weil er über die verschließbare Leitungsverbindung an die Wasserschale gekoppelt ist, kann eine Teilmenge entsprechend einer Getränkeportion in die Wasserschale abgegeben werden. Die Leitungsverbindung kann beispielsweise über ein hand- oder elektrisch betätigtes Ventil verfügen, das zum geeigneten Zeitpunkt während der Zubereitung des Brühgetränks, beispielsweise für eine bestimmte Zeitdauer, geöffnet wird. Auf diese Weise kann zwar die Kreiselpumpe gleichzeitig mit dem Mahlwerk aktiviert werden. Mangels Wasser in der Wasserschale allerdings gelangt kein Wasser in die Zentrifugierkammer, bevor sie nicht mit der gewünschten Menge an Kaffeepulver gefüllt ist. Erst dann kann die Leitungsverbindung zwischen dem Wasservorratsbehälter und der Wasserschale gezielt oder gesteuert geöffnet werden, um Zubereitungswasser in die Wasserschale gelangen zu lassen. Da die Pumpe bei sich drehender Zentrifugierkammer ebenfalls in Betrieb ist, wird das Wasser unmittelbar aus der Wasserschale in die Zentrifugierkammer geleitet. Damit braucht nicht die Pumpe separat angesteuert zu werden, sondern lediglich die Wasserzufuhr, wofür ein geringerer technischer Aufwand erforderlich ist. Zwischen dem Wasservorratsbehälter und der Wasserschale kann eine Heizeinrichtung angeordnet sein, die das Wasser auf Brühtemperatur bringt. Statt eines separaten Wasservorratsbehälters kann der erfindungsgemäße Kaffeevollautomat alternativ an ein Haushaltswassernetz angeschlossen sein.

Nach Ausgabe des gebrühten Kaffeegetränks kann die Zentrifugalkraft zur Selbstreinigung der Zentrifugalkammer genutzt werden. Dazu kann die Zentrifugierkammer aus einem kegelförmigen Kammeroberteil und einem scheibenförmigen Kammerunterteil aufgebaut sein, die gegeneinander in axialer Richtung verfahrbar sind. Nach Abschluss des Brühverfahrens können das Kammeroberteil und das Kammerunterteil auseinander gefahren werden, so dass zwischen ihnen ein größerer Spalt entsteht. Die Zentrifugalkraft bewirkt nun, dass der ausgelaugte Kaffeetrester von dem scheibenförmigen Kammerunterteil in radialer Richtung abgeschleudert wird. Auf Kaffeetrester, der am Kammeroberteil haftet, wirkt die Zentrifugalkraft ebenfalls, die ihn durch den entstehenden Spalt radial nach außen befördert. Vorteilhafterweise besteht zwischen dem Kammeroberteil und dem Kammerunterteil eine Reibschlusskupplung, so dass bei Anlage der beiden Teile aneinander das nicht angetriebene Kammerteil der Zentrifugierkammer über den Reibschluss am anderen Kammerteil ebenfalls angetrieben wird. Vorzugsweise besteht die Reibschlusskupplung umfangsseitig zwischen dem Kammeroberteil und dem Kammerunterteil, weil sie dort ohnehin aneinander anliegen, wenn sie gemeinsam die Zentrifugierkammer zur Zubereitung eines Kaffeegetränks bilden. Das Auseinanderfahren beider Kammerteile kann vorzugsweise gegen die Kraft einer axial wirkenden Feder erfolgen, so dass die aktivierte Reibschlusskupplung unter Federvorspannung steht.

Nach einer weiteren vorteilhaften Ausgestaltung der Erfindung umfasst der Kaffeevollautomat einen Tresterbehälter, der ringförmig und koaxial zur Zentrifugierkammer und konzentrisch zur Wasserschale angeordnet ist. Dadurch lässt sich eine kompakte Anordnung der Wasserschale einerseits und des Tresterbehälters andererseits erreichen. Die Wasserschale kann den Bereich unterhalb des Kammerunterteils einnehmen, wohin ohnehin kein Trester abgegeben werden kann. Da der Trester die Zentrifugierkammer der Zentrifugalkraft folgend radial verlässt, sollte der Tresterbehälter jedenfalls einen größeren Außenradius aufweisen als sie.

Nach einer weiteren vorteilhaften Ausgestaltung der Erfindung umfasst der Kaffeevollautomat einen Auffangbehälter für das Brühgetränk, der ringförmig und koaxial zur Wasserschale und zum Tresterbehälter angeordnet ist. Anders als der Trester verlässt das Brühgetränk die Zentrifugierkammer, solange sie noch weitgehend geschlossen ist, durch einen engen Filter- oder Zentrifugierspalt, den das Kammeroberteil und das Kammerunterteil an ihrem Umfang zwischen sich bilden. Zum Öffnen des Zentrifugierspalts beim Tresterentleeren können das Kammeroberteil und das Kammerunterteil auseinander gefahren werden, um einen größeren Spalt zwischen sich zu bilden. Wird dazu nur das Kammeroberteil angehoben, so findet die Getränkeausgabe weitgehend auf dem gleichen Niveau statt wie das Ausschleudern des Tresters. Daher kann der Tresterbehälter beim Auseinanderfahren der Zentrifugierkammer ebenfalls angehoben werden. Vorteilhafterweise kann daher das Kammerunterteil abgesenkt werden. Damit ergibt sich ein unterschiedliches Ausgabeniveau zwischen dem Getränk, nämlich durch den Zentrifugierspalt, einerseits, und dem Trester, nämlich bei geöffneter Zentrifugierkammer und abgesenktem Kammerunterteil, andererseits. Das Ausgabeniveau des Tresters liegt tiefer, so dass der Auffangbehälter einerseits und der Tresterbehälter andererseits lediglich in unterschiedlichen Höhen angebracht werden müssen, um das Getränk nicht durch die Tresterausgabe zu beeinträchtigen. Vorteilhafterweise kann zusätzlich auch das Kammeroberteil geringfügig abgesenkt werden. Zusätzlich kann eine Unterseite des Auffangbehälters für das Kaffeegetränk als Trennfläche die Neigung des Kammeroberteils radial nach außen fortsetzen, so dass abgeschleuderter Trester vom Kammerunterteil gegen die Schrägfläche gelangt und von dort abwärts in den Tresterbehälter fällt. Dadurch ergibt sich insgesamt ein sehr kompakter Aufbau des Kaffeevollautomaten, weil Getriebe, separate Antriebe und Steuerungen für die einzelnen Bestandteile wie Mahlwerk, Zentrifugierkammer und Pumpe entfallen können und sich auch weitere, insbesondere mechanische Steuerungseinrichtungen, beispielsweise Mehrfachventile, ebenfalls erübrigen.

Das Prinzip der Erfindung wird im Folgenden anhand einer Zeichnung beispielshalber noch näher erläutert. In der Zeichnung zeigen:
- Figur 1:: Eine Prinzipdarstellung der Erfindung in einer ersten Schnittansicht während eines Brühvorgangs,
- Figur 2:: die Schnittansicht während des Tresterausstoßens, und
- Figur 3:: das Mahlwerkzeug.

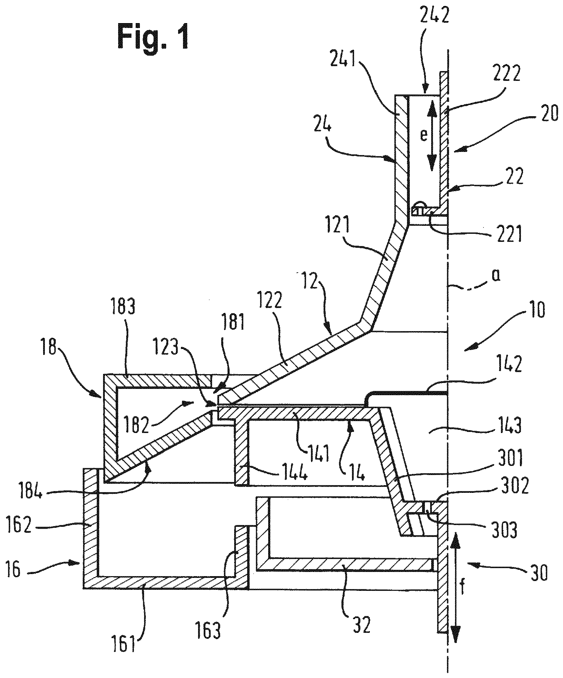

Figur 1 zeigt in einer prinzipiellen Darstellung einen Schnitt durch den erfindungsgemäßen Kaffeevollautomaten. Er zeichnet sich dadurch aus, dass auf einer vertikalen Rotationsachse a eine Zentrifugierkammer 10 als Brühkammer, ein Mahlwerk 20 und eine Pumpe 30 koaxial übereinander angeordnet sind. Die Zentrifugierkammer 10 setzt sich aus einem kegelstumpfförmigen Kammeroberteil 12 und einem scheibenförmigen Kammerunterteil 14 zusammen. Das Kammeroberteil 12 ist als Doppelkegelstumpf ausgebildet und umfasst einen oberen steileren Kegelabschnitt 121 und einen unteren flacheren Kegelabschnitt 122. Das Kammerunterteil 14 ist im Wesentlichen scheibenförmig ausgebildet. Es setzt sich aus einer scheibenförmigen Ringfläche 141 und einem achsnahen scheibenförmigen Deckel 142 mit einem abwärts gekröpften Rand zusammen, der auf der Ringfläche 141 aufliegt. Unterseitig und nahe ihrem Außenumfang steht eine zylindrische Ringwand 144 in axialer Richtung von der Ringfläche 141 ab.

Die Ringfläche 141 und der flachere Kegelabschnitt 122 konvergieren in einer radialen, nach außen weisenden Richtung von der Achse a weg zu einem Filter- oder Zentrifugierspalt 123, der sich in einem äußeren Randbereich der Ringfläche 141 und des flachen Kegelabschnitts 122 umfangsseitig an beiden erstreckt. Er kann so ausgebildet sein und die gleiche Funktion übernehmen wie der Filterspalt und der Ringspalt gemäß der DE 33 28 396 C2 des Anmelders.

Die Ringfläche 141 geht in ihrem gegenüberliegenden, achsnahen Bereich in einen abwärts gerichteten und sich dorthin verjüngenden Konus 301 über, der in der dargestellten Position mit seinem unteren Drittel in die Wasserschale 32 hineinragt. Dort schließt eine Lochscheibe 302 radial an den Konus 301 an. Sie enthält mehrere Durchbrüche 303, die wasserpassierbar sind. Die Lochschale 302, der Konus 301 und der Deckel 142 schließen einen Raum 143 ein. Der Deckel 142 liegt mit seinem äußeren Rand auf der Ringfläche 141 an, lässt aber Wasser in radialer Richtung passieren. Er hat damit weitgehend die gleiche Funktion wie der Einsatz 340 mit dem Ringspalt 342 gemäß der DE 33 28 396.

Der Konus 301 ragt mit seinem unteren Drittel in die Wasserschale 32 hinein. Er stellt damit einen wesentlichen Bestandteil der Pumpe 30 dar, die nach dem Prinzip der Kreiselpumpe arbeitet. Damit der Konus 301 genügend Wasser fördern kann, lässt sich die Wasserschale 32 in vertikaler Richtung entlang der Achse a verschieben.

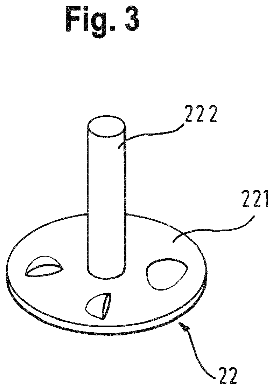

Oberhalb an die Zentrifugierkammer 10 schließt sich das Mahlwerk 20 an. Es umfasst ein feststehendes Mahlwerkzeug 22, dessen Prinzip in Figur 3 vergrößert dargestellt ist. Das Mahlwerkzeug 22 besteht demzufolge aus einer radialen Raspelscheibe 221, die an einem axialen Stiel 222 befestigt ist. Das Mahlwerkzeug 22 ist umgeben von einem zylindrischen Mahlwerksbehälter 24, dessen senkrechte Mantelfläche 241 an seinem unteren Ende in den steileren Kegelabschnitt 121 der Zentrifugierkammer 10 übergeht. Der Mahlwerksbehälter 24 lässt sich über eine Befüllöffnung 242 mit Kaffeebohnen beladen.

Radial außerhalb der Zentrifugierkammer 10 und in etwa auf Höhe des Spalts 123 schließt sich der ringförmige Auffangbehälter 18 an. Sein Innenradius entspricht dem Außenradius der Zentrifugierkammer 10. An seiner ihr zugewandten Innenseite 181 weist er eine ring- und schlitzförmige Auffangöffnung 182 auf, mit der der Spalt 123 fluchtet. An die vertikale Innenseite 181 schließt sich oberseitig radial ein horizontaler ringförmiger Deckel 183 an, dem ein geneigter Boden 184 gegenüberliegt. Seine Neigung entspricht derjenigen des flacheren Kegelabschnitts 122.

Unter dem Auffangbehälter 18 liegt der ringförmige Tresterbehälter 16. Er hat einen weitgehend U-förmigen Querschnitt mit einem waagrechten Boden 161, einer höher aufragenden Außenwand 162 und einer niedrigeren Innenwand 163. Die Außenwand 162 steht soweit nach oben, dass der Auffangbehälter 18 teilweise in den Tresterbehälter 16 in dessen oberen Bereich eintaucht. Die ringförmige Innenwand 163 fluchtet mit der Ringwand 144 des Kammerunterteils 14, die von der Ringfläche 141 in deren äußeren Bereich nach unten absteht.

Figur 1 zeigt die Mahl- und Brühposition des erfindungsgemäßen Kaffeevollautomaten. Nach Befüllen des Mahlwerksbehälters 24 durch seine Befüllöffnung 42 mit Kaffeebohnen kann der Kaffeevollautomat in Betrieb genommen werden. Ein nicht dargestellter Motor treibt das Mahlwerk 20 und zwar den Mahlwerksbehälter 24 an und versetzt ihn in Rotation. Das demgegenüber feststehende Mahlwerkzeug 22 raspelt die Kaffeebohnen im rotierenden Mahlwerksbehälter 24 und vermahlt sie. Das daraus resultierende Kaffeepulver fällt der Schwerkraft folgend vertikal abwärts in die Zentrifugierkammer 10. Dort gelangt es zunächst in den steileren Kegelabschnitt 121 und schließlich in den flacheren Kegelabschnitt 122. Spätestens, wenn es auf dem Kammerunterteil 14 aufkommt, treibt die Rotation der Zentrifugierkammer 10 das Kaffeepulver radial nach außen. Da der Mahlwerksbehälter 24 in das Kammeroberteil 12 einstückig übergeht, rotiert auch das Kammeroberteil 12 mit derselben Winkelgeschwindigkeit wie das Mahlwerk 20. Das Kammeroberteil 12 steht im Bereich des Spalts 123 in einer reibschlüssigen Verbindung zum Kammerunterteil 14, so dass auch dieses mit derselben Winkelgeschwindigkeit angetrieben wird und rotiert.

Sobald die abgegebene Kaffeebohnenportion für ein Brühgetränk vermahlen und in die Zentrifugierkammer 10 gelangt ist, wird Wasser aus einem Vorratsbehälter oder einem Haushaltswasseranschluss in die Wasserschale 32 geleitet. Die eingeleitete Wassermenge entspricht derjenigen Zubereitungsmenge für ein gewünschtes Kaffeegetränk. Da das Kammerunterteil 14 und der daran anschließende Konus 301 der Pumpe 30 in die Wasserschale hineinreichen, versetzt der rotierende Konus 301 das Wasser in Rotation. Wasser, das innerhalb des Konus 301 und sich damit im Raum 143 befindet, steigt der Fliehkraft folgend am Konus 301 auf, strömt durch die Durchbrüche 303 hindurch und gelangt schließlich in einen oberen Bereich des Konus 301. Unterhalb des Deckels 142 und unter ihm hindurch fließt es auf die Ringfläche 141. Insofern zeigt sich die gleiche Funktion der Kreiselpumpe 30 wie der Hohlkegel 324 der DE 33 28 396 des Anmelders.

Die Fliehkraft drückt das Wasser in der Zentrifugalkammer 10 an deren äußeren Rand und damit durch das Kaffeepulver hindurch. Nach Eluieren des Kaffeepulvers drückt die Fliehkraft das gebrühte Getränk durch den Zentrifugierspalt 123 hindurch, so dass es in den Auffangbehälter 18 spritzt. Aufgrund der geneigten Bodenfläche 184 sammelt es sich an einem äußeren Rand des Auffangbehälters 18, von wo aus es in eine bereitgestellte Tasse ablaufen kann.

Da jeweils nur die benötigten Menge an Kaffeebohnen und Wasser in das Mahlwerk 20 bzw. in die Pumpe 30 geleitet werden, braucht das Mahlwerk 20 nach Abschluss des Mahlvorgangs nicht abgeschaltet zu werden, wodurch eine Kupplung und deren Betätigungseinrichtung entfallen kann. Ebenso braucht die Pumpe 30 nicht separat aktiviert bzw. deaktiviert zu werden, sondern läuft gleichsam mit und wird lediglich durch Zugabe von Brühwasser in die Wasserschale 32 in Aktion versetzt. Ist das für das gewünschte Getränk dosierte Wasser aufgebraucht, braucht auch die Pumpe 30 nicht deaktiviert und damit separat betätigt zu werden. Sie läuft solange leer mit, bis das Brühwasser die Zentrifugierkammer 10 vollständig passiert hat und das Getränk fertig zubereitet ist. Auch für sie sind daher keine zusätzlichen Schalt- und Kopplungsvorrichtungen erforderlich.

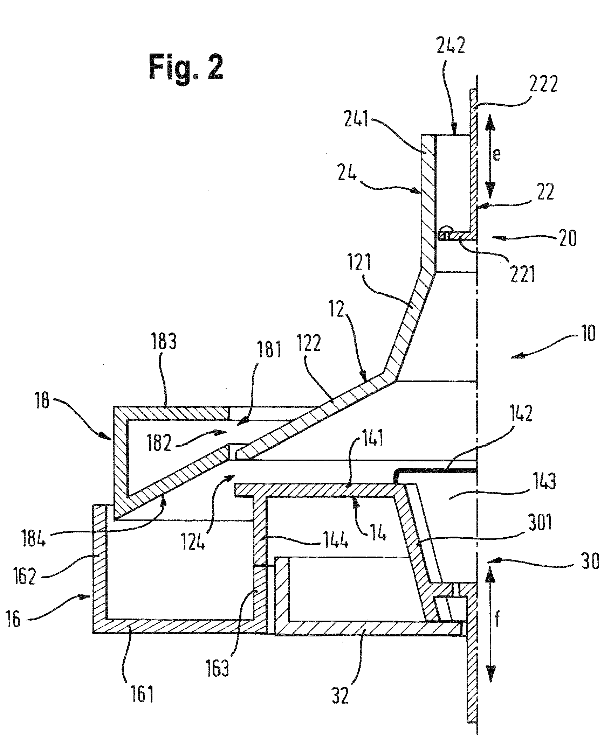

Die kegelstumpfförmige Gestaltung der Zentrifugierkammer 10, die gegenüber der Zentrifugierkammer der DE 33 28 396 umgekehrt und damit vergleichbar der DE 24 28 188 ausgebildet ist, erlaubt auch eine selbsttätige Reinigung von Kaffeetrester. Dazu wird die Zentrifugierkammer 10 vertikal abwärts verfahren, wie in Figur 2 gezeigt. Sobald der flache Kegelabschnitt 122 und die Bodenfläche 184 des Auffangbehälters 18 miteinander fluchten, kann die Zentrifugierkammer 10 geöffnet werden. Dazu wird das Kammerunterteil 14 weiter abgesenkt. Dadurch erweitert sich der Zentrifugierspalt 123 (Figur 1) zu einem ihm gegenüber größeren Aufwurfspalt 124, sodass ihn auch Kaffeetrester passieren kann. Er wird von der Ringfläche 141 radial nach außen abgeschleudert, prallt gegen die Unterseite der Bodenfläche 184 und fällt in den Tresterbehälter 16. Auch Tresterreste, die sich auf der Unterseite des flachen Kegelabschnitts 122 befinden, werden durch die Fliehkraft durch den Aufwurfspalt 124 und dort weiter gegen die Unterseite der Bodenfläche 184 gedrängt. Eine Begrenzung der Abwärtsbewegung bildet die Ringwand 144, die auf der Innenwand 163 des Tresterbehälters 16 aufsetzt.

Auch die Wasserschale 32 lässt sich abwärts bewegen. In einer vollständig abgesenkten Position des Kammerunterteils 14 setzt dann der Konus 301 auf dem Boden der Wasserschale 32 auf. Die vertikale Bewegbarkeit der ansonsten rotatorisch feststehenden Wasserschale dient dazu, bei einem Zubereitungsvorgang weniger Wasser der Wasserschale 32 zuführen zu müssen. Die Wasserschale 32 kann vielmehr dem Kammerunterteil 14 bzw. dem Konus 301 nachgefahren werden, so dass er möglichst tief in die Wasserschale 32 eintauchen kann. Bei einer feststehenden Wasserschale, die in einer Position gemäß Figur 2 angeordnet sein müsste, müsste mehr Zubereitungswasser eingeleitet werden, um in einer angehobenen Position des Konus 301 gemäß Figur 1 ausreichend Wasser in die Zentrifugierkammer 10 fördern zu können.

Das Kammeroberteil 12 und der unmittelbar daran angeschlossene Mantel 241 des Mahlwerks werden motorisch in eine Rotation versetzt. Außerdem lassen sie sich um einen kleineren Verschiebeweg e vertikal verschieben. Das Kammerunterteil 14 mit dem daran angeschlossenen Konus 301 dagegen werden nicht unmittelbar motorisch angetrieben, sondern durch den Reibschluss im Bereich des Zentrifugierspalts 123 und damit mittelbar über das Kammeroberteil 12. Vertikal lassen sie sich allerdings über einen größeren Verschiebeweg f vertikal verschieben, damit der Spalt 123 nach einer Verschiebung des Kammeroberteils 12 in Richtung e zum Auswurf des Tresters in den Tresterbehälter 16 geöffnet werden kann.

Der kompakte Aufbau des beschriebenen Kaffeevollautomaten führt dazu, dass ein Getriebe zum Antrieb des Mahlwerks, der Pumpe oder der Zentrifugierkammer entfallen kann. Alle Bestandteile, also die Zentrifugierkammer 10, das Mahlwerk 20 und die Pumpe 30 können von ein- und demselben Motor angetrieben werden. Kopplungen zwischen ihnen und zum Motor sowie deren Betätigungseinrichtungen können ebenfalls entfallen. Außerdem ist kein aufwändiges Fluidsystem ggf. mit einem keramischen Mehrfachventil erforderlich, was den Aufbau weiter vereinfacht. Insgesamt ergibt sich ein extrem einfacher und kompakter Aufbau, der niedrige Herstellungskosten erwarten lässt.

Da es sich bei den vorhergehenden, detailliert beschriebenen Mahlwerk, Pumpe und Zentrifugierkammer eines Kaffeevollautomaten um ein Ausführungsbeispiel handelt, können sie in üblicher Weise vom Fachmann in einem weiten Umfang modifiziert werden, ohne den Bereich der Erfindung zu verlassen. Insbesondere können auch die konkreten Ausgestaltungen des Mahlwerkzeugs in anderer Form als in der hier beschriebenen folgen. Ebenso können der Tresterbehälter und der Auffangbehälter in einer anderen Form ausgestaltet werden, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrfach vorhanden sein können.

### Bezugszeichenliste

- 10: Zentrifugierkammer
- 12: Kammeroberteil
- 14: Kammerunterteil
- 16: Tresterbehälter
- 18: Auffangbehälter
- 20: Mahlwerk
- 22: Mahlwerkzeug
- 24: Mahlwerksbehälter
- 30: Pumpe
- 32: Wasserschale
- 121: steiler Kegelabschnitt
- 122: flacher Kegelabschnitt
- 123: Zentrifugierspalt
- 124: Auswurfspalt
- 141: Ringfläche
- 142: Deckel
- 143: Raum
- 144: Ringwand
- 161: Boden
- 162: Außenwand
- 163: Innenwand
- 181: Innenseite
- 182: Auffangöffnung
- 183: Deckel
- 184: Bodenfläche
- 221: Raspelscheibe
- 222: Stiel
- 241: Mantel
- 242: Befüllöffnung
- 301: Konus
- 302: Lochscheibe
- 303: Durchbruch
- a: Rotationsachse
- e, f: Verschiebeweg

## Patentansprüche

1. Kaffeevollautomat für Haushaltszwecke mit einer Zentrifugierkammer (10) mit einem Kammeroberteil (12) und einem ihm gegenüber bewegbaren Kammerunterteil (14) als Brühraum, mit einem Motor zum Antreiben der Zentrifugierkammer (10), mit einem Mahlwerk (20), das koaxial zur Zentrifugierkammer (10) und über ihr angeordnet ist und vom Motor antreibar ist, und einer unmittelbaren Kopplung zwischen dem Kammeroberteil (12) und dem Mahlwerk (20), **dadurch gekennzeichnet, dass** das Mahlwerk (20) ein feststehendes Mahlwerkzeug (22) und einen rotierbaren Mahlwerksbehälter (24) umfasst.

2. Kaffeevollautomat nach dem obigen Anspruch, **gekennzeichnet durch** eine starre Kopplung zwischen dem Kammeroberteil (12) und dem Mahlwerk (20)

3. Kaffeevollautomat nach einem der obigen Ansprüche, **gekennzeichnet durch** eine koaxial zur Zentrifugierkammer (10) und unterhalb der Zentrifugierkammer (10) angeordnete Wasservorratsschale (32) und eine Pumpe (30) zur Wasserförderung aus der Wasservorratsschale (32) in die Zentrifugierkammer (10).

4. Kaffeevollautomat nach Anspruch 3, **gekennzeichnet durch** eine Kreiselpumpe (30), die vom Motor antreibbar ist.

5. Kaffeevollautomat nach dem obigen Anspruch mit einer starren Kopplung der Kreiselpumpe (30) an die Zentrifugierkammer (12), **gekennzeichnet durch** einen Wasservorratsbehälter oberhalb der Wasservorratsschale (32) und eine verschließbare Leitungsverbindung dazwischen.

6. Kaffeevollautomat nach einem der obigen Ansprüche mit einer Zentrifugierkammer (10) mit einem kegelförmigen Kammeroberteil (12) und einem scheibenförmigen Kammerunterteil (14), **gekennzeichnet durch** einen Reibschlusskupplung zwischen dem Kammeroberteil (12) und dem Kammerunterteil (14).

7. Kaffeevollautomat nach einem der obigen Ansprüche mit einem Tresterbehälter (16), **gekennzeichnet durch** dessen ringförmige Anordnung konzentrisch zur Wasservorratsschale (32).

8. Kaffeevollautomat nach einem der obigen Ansprüche mit einem Auffangbehälter (18), **gekennzeichnet durch** dessen ringförmige Anordnung koaxial zur Wasservorratsschale (32).

## Claims

1. Fully automatic coffee maker for domestic use with a centrifuge chamber (10) with a chamber upper part (12) and a chamber lower part (14) which can be moved in relation thereto as a brewing compartment, with a motor for driving the centrifuge chamber (10), with a grinder (20) which is arranged coaxially to the centrifuge chamber (10) and above it and which can be driven by the motor, and with a direct coupling between the chamber upper part (12) and the grinder (20), **characterised in that** the grinder (20) comprises a fixed grinder tool (22) and a rotatable grinder container (24).

2. Fully automatic coffee maker according to the above claim, **characterised by** a rigid coupling between the chamber upper part (12) and the grinder (20).

3. Fully automatic coffee maker according to one of the above claims, **characterised by** a water supply tray (32) arranged coaxially to the centrifuge chamber (10) and below the centrifuge chamber (10) and a pump (30) for conveying water from the water supply tray (32) into the centrifuge chamber (10).

4. Fully automatic coffee maker according to claim 3, **characterised by** a rotary pump (30) which can be driven by the motor.

5. Fully automatic coffee maker according to the above claim with a rigid coupling of the rotary pump (30) to the centrifuge chamber (12), **characterised by** a water supply container above the water supply tray (32) and a closable connection line therebetween.

6. Fully automatic coffee maker according to one of the above claims with a centrifuge chamber (10) with a conical chamber upper part (12) and a disk-shaped chamber lower part (14), **characterised by** a frictional connection between the chamber upper part (12) and the chamber lower part (14).

7. Fully automatic coffee maker according to one of the above claims with a grounds container (16), **characterised by** the annular arrangement thereof concentrically to the water supply tray (32).

8. Fully automatic coffee maker according to one of the above claims with a collecting container (18), **characterised by** the annual arrangement thereof coaxially to the water supply tray (32).

## Revendications

1. Machine à café entièrement automatique à usage domestique, comprenant une chambre de centrifugation (10) munie d'une partie supérieure (12) de chambre et d'une partie inférieure (14) de chambre, déplaçable par rapport à celle-là, en tant que chambre de percolation, comprenant un moteur destiné à entraîner la chambre de centrifugation (10), comprenant un moulin (20) qui est disposé coaxialement à la chambre de centrifugation (10) et au-dessus d'elle et est entraînable par le moteur, et comprenant un accouplement direct entre la partie supérieure (12) de chambre et le moulin (20), **caractérisée en ce que** le moulin (20) comprend un outil de broyage fixe (22) et un récipient de moulin (24) rotatif.

2. Machine à café entièrement automatique selon la revendication précédente, **caractérisée par** un accouplement rigide entre la partie supérieure (12) de chambre et le moulin (20).

3. Machine à café entièrement automatique selon l'une quelconque des revendications précédentes, **caractérisée par** une coupelle de stockage d'eau (32) disposée coaxialement à la chambre de centrifugation (10) et en dessous de la chambre de centrifugation (10) et par une pompe (30) destinée à transporter l'eau hors de la coupelle de stockage d'eau (32) pour l'amener dans la chambre de centrifugation (10).

4. Machine à café entièrement automatique selon la revendication 3, **caractérisée par** une pompe centrifuge (30) qui est entraînable par le moteur.

5. Machine à café entièrement automatique selon la revendication précédente, comprenant un accouplement rigide de la pompe centrifuge (30) à la chambre de centrifugation (10), **caractérisée par** un réservoir de stockage d'eau au-dessus de la coupelle de stockage d'eau (32) et par une liaison de conduction pouvant être fermée.

6. Machine à café entièrement automatique selon l'une quelconque des revendications précédentes, comprenant une chambre de centrifugation (10) munie d'une partie supérieure (12) de chambre en forme de cône et d'une partie inférieure (14) de chambre en forme de disque, **caractérisée par** un accouplement à friction entre la partie supérieure (12) de chambre et la partie inférieure (14) de chambre.

7. Machine à café entièrement automatique selon l'une quelconque des revendications précédentes, comprenant un réservoir de marc (16), **caractérisée par** la disposition annulaire de celui-ci de manière concentrique par rapport à la coupelle de stockage d'eau (32).

8. Machine à café entièrement automatique selon l'une quelconque des revendications précédentes, comprenant un réservoir de récupération (18), **caractérisée par** la disposition annulaire de celui-ci coaxialement à la coupelle de stockage d'eau (32).
